# EUROPEAN PATENT APPLICATION

(11) **EP 2 996 084 A1**
(43) Date of publication of application: **16.03.2016**
(21) Application number: 14885014.2
(22) Date of filing: 07.03.2014
(51) Int. Cl.: G06Q 50/12

(54) **VEHICLE PREVENTIVE MAINTENANCE SYSTEM**

(71) Applicant: Hitachi Systems, Ltd., Tokyo 141-8672 (JP)
(72) Inventor: IKEDA, Hideki, Tokyo 141-8672 (JP)
(74) Representative: de Kernier, Gabriel
(86) International application number: PCT/JP2014/055900
(87) International publication number: WO 2015/132947

(57) **Abstract**

A vehicle preventive maintenance system supports operations related to preventive maintenance of a vehicle by appropriately figuring out a deterioration state of a consumable of the vehicle by utilizing telematics, evaluating a maintenance plan from maintenance results based on the appropriate making of the maintenance plan, and feeding back the evaluation to a next maintenance plan. According to a typical embodiment, the system has: a vehicle-information collecting unit 11 which collects vehicle information collected at each vehicle 20 and information related to the results of the maintenance of the vehicle 20 and which records the information in a vehicle-information accumulating DB 16; an analysis unit 13 which calculates a deterioration degree of a consumable of each vehicle 20 based on the vehicle information and which records the deterioration degree in a vehicle state DB 17; a plan managing unit 14 which creates the maintenance plan including information of maintenance timing and a replacement target consumable a based on the deterioration degree of each consumable and which records the maintenance plan in a maintenance plan DB 18; and a plan evaluating unit 15 which evaluates validity of the maintenance plan based on information including replacement results of the consumable in the maintenance of each vehicle 20.

## Description

### TECHNICAL FIELD

The present invention relates to a technique of managing inspection and maintenance of a vehicle, and, more particularly, the present invention relates to a technique effectively applied to a vehicle preventive maintenance system that supports plan making and management of an appropriate maintenance plan by telematics.

### BACKGROUND ART

In recent years, utilization of telematics that provides various services by transmitting/receiving information through wireless communication with an automobile, a transportation vehicle, etc. has been studied. While services such as figuring out a running state of a vehicle and distribution of traffic information, etc. for a vehicle have been mainly studied, application to a region of repair and maintenance of the vehicle such as malfunction diagnosis of the vehicle and judgment of the deterioration state of parts by collecting and analyzing vehicle information has been also studied.

For example, Japanese Patent No. 4583594 (Patent Document 1) describes a vehicle managing system that checks whether vehicle information is being received by access from a mobile phone of a user, a data request of the vehicle of his/her own is being received by access from a personal computer of the user, or a data request is being received by access from a computer of another section related to the vehicle managing system, and then, if the data is being received, the data is processed and accumulated in a database in time series, and besides, predictive diagnosis is performed based on time-dependent change in learned values, and further, the deterioration states of parts and the system are figured out based on initial information of the vehicle, and then, the data is transmitted to an access destination.

### PRIOR ART DOCUMENT

### PATENT DOCUMENT

Patent Document 1: Japanese Patent No. 4583594

### SUMMARY OF THE INVENTION

### PROBLEMS TO BE SOLVED BY THE INVENTION

By using the technique as described in Patent Document 1, the current deterioration state of parts of the vehicle and the system is figured out, and abnormality is predicted, so that maintenance guidance, etc. can be performed.

Meanwhile, for example, for a carrier, etc. that owns many transportation vehicles, it is important how the maintenance such as inspection and maintenance of each vehicle is efficiently and effectively performed to reduce the overall cost required for the maintenance. And, for this, it is important how the maintenance plan is previously and appropriately made.

For example, a vehicle has many consumables which can be replacement targets in maintenance work, and each of them has a unique replacement period/timing. It is desired that these consumables can be collectively replaced at the timing of one time of maintenance as much as possible. However, even if consumables for which the replacement timing has come at the point of maintenance can be replaced, it is difficult to collectively inspect/replace consumables for which it is expected that the replacement timing is coming soon, which results in a situation that the number of times of maintenance is increased or that the consumables cannot be replaced even after the replacement timing and are continued to be used as a result.

In order to support such a mechanism of preventive maintenance of a vehicle by an information processing system, it is required to, for example, figure out the replacement timing of the consumables by not qualitative evaluation such as "when the consumables are worn" or "when the consumables cause noises" as for some of current consumables but quantitative evaluation. Meanwhile, regarding the consumables, it is conceivable that characteristics of each vehicle such as conditions of the frequency of high-speed running, a loading capacity, a running area, and a driver affect the deterioration state of the consumables, and therefore, it is difficult to appropriately figure out the deterioration state and predict appropriate replacement timing in comes cases. Also, even the same consumables have different durable years depending on a price, quality, a grade, etc. in some cases, and therefore, it is difficult to judge use of which consumable has the highest cost performance in the long term in some cases.

Therefore, an object of the present invention is to provide a vehicle preventive maintenance system that supports operations related to preventive maintenance of the vehicle by appropriately figuring out the deterioration state of consumables of the vehicle by utilizing telematics, making the appropriate maintenance plan, evaluating the maintenance plan as a result of maintenance based on the plan, and performing feedback to a next maintenance plan.

The above and other objects and novel characteristics of the present invention will be apparent from the description of the present specification and the accompanying drawings.

### MEANS FOR SOLVING THE PROBLEMS

The typical summary of the inventions disclosed in the present application will be briefly described as follows.

A vehicle preventive maintenance system according to a typical embodiment of the present invention is a vehicle preventive maintenance system that supports management of a maintenance plan related to execution of maintenance of replacing a consumable of a vehicle, the vehicle preventive maintenance system having: a vehicle-information collecting unit that collects vehicle information collected at each vehicle and information related to a result of maintenance of the vehicle via a network and records the information in a vehicle-information accumulating storage unit; an analysis unit that calculates a deterioration degree of a consumable of each vehicle based on the vehicle information recorded in the vehicle-information accumulating storage unit and records the deterioration degree in a vehicle-state storage unit; a plan managing unit that creates or updates the maintenance plan including information of timing of the maintenance and the consumable to be a replacement target based on the deterioration degree of each consumable recorded in the vehicle-state storage unit or a prediction of the deterioration degree and records the maintenance plan in a maintenance-plan storage unit; and a plan evaluating unit that evaluates validity of the maintenance plan related to the maintenance based on information including a result of replacement of the consumable in the maintenance of each vehicle.

### EFFECTS OF THE INVENTION

The effects obtained by typical aspects of the present invention disclosed in the present application will be briefly described below.

That is, according to the typical embodiment of the present invention, operations related to preventive maintenance of the vehicle can be supported by appropriately figuring out the deterioration state of the consumable of the vehicle by utilizing telematics, making the appropriate plan, evaluating the maintenance plan by using the maintenance results based on the plan, and performing feedback to a next maintenance plan.

### BRIEF DESCRIPTIONS OF THE DRAWINGS

FIG. 1 is a diagram showing an outline of a configuration example of a vehicle preventive maintenance system according to an embodiment of the present invention;
FIG. 2 is a diagram showing an outline of an example of a PDCA cycle achieved by utilizing a preventive maintenance service in the embodiment of the present invention;
FIG. 3 is a diagram showing an outline of an example of a data configuration of a vehicle-information accumulating DB in the embodiment of the present invention;
FIGs. 4 (a) and (b) are diagrams each showing an outline of an example of data configuration of a vehicle state DB in the embodiment of the present invention;
FIG. 5 is a diagram showing an outline of an example of a data configuration of a maintenance plan DB in the embodiment of the present invention;
FIG. 6 is a diagram showing an outline of an example of a data configuration of a consumable master DB in the embodiment of the present invention.

### BEST MODE FOR CARRYING OUT THE INVENTION

Hereinafter, an embodiment of the present invention will be described in detail based on the drawings. Note that the same components are denoted by the same reference symbols in principle throughout all the drawings for describing the embodiment, and the repetitive description thereof will be omitted.

A vehicle preventive maintenance system according to an embodiment of the present invention is a system that supports, for example, collection and central management of the information of these vehicles in a carrier, etc. owning and managing many vehicles by utilizing telematics, quantitative estimation of the deterioration state of consumables based on the information, and besides, making and management of an efficient maintenance plan based on the results of the estimation. From the viewpoint of preventive maintenance, this maintenance plan includes information indicating which part is to be used as a consumable after the replacement in addition to contents such as information indicating when next (or the subsequent or later maintenance after the next) maintenance is to be performed for each vehicle, and indicating which consumables are to be collectively replaced. Moreover, even for the same consumables, the parts that can achieve the most-reduced life cycle cost (LCC) can be selected from the viewpoints of the price and the quality (durable years, etc.).

Moreover, the vehicle preventive maintenance system of the present embodiment achieves the PDCA cycle not only making the maintenance plan but also evaluating the validity of the maintenance plan based on the results of maintenance performed based on the maintenance plan, and optimizing the next maintenance plan by performing feedback the result to the maintenance plan, so that the maintenance plan can be continuously improved.

### <System Configuration>

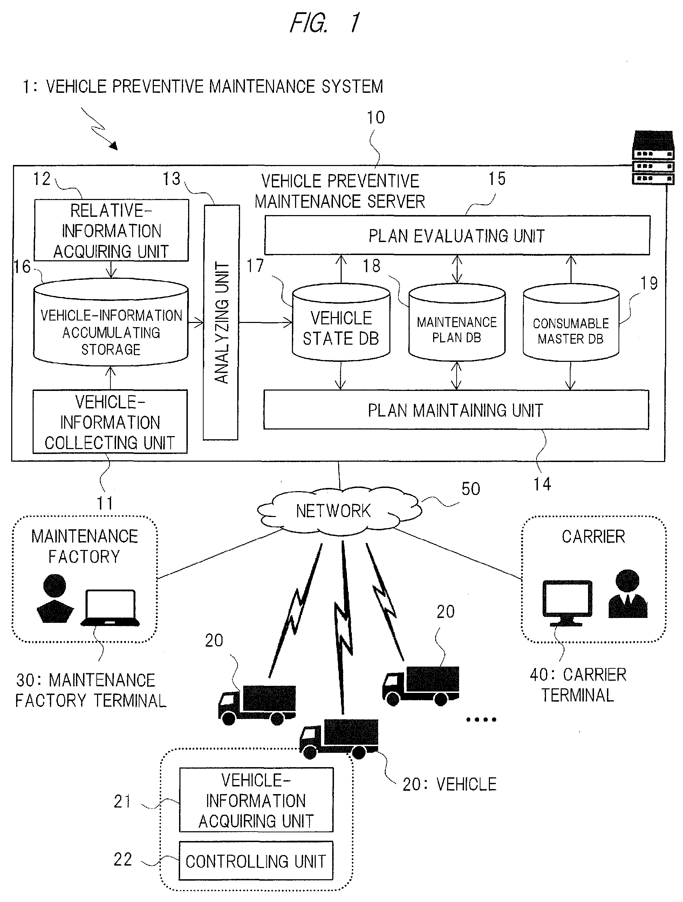

FIG. 1 is a diagram showing an outline of a configuration example of the vehicle preventive maintenance system according to an embodiment of the present invention. The vehicle preventive maintenance system 1 provides a telematics service that supports the making and the management of the maintenance plan related to each vehicle 20 for a carrier by, for example, acquiring, collecting, and analyzing the vehicle information by a vehicle preventive maintenance server 10 via a network 50 such as wireless communication and the Internet from one or more vehicles 20 which are owned or managed by the carrier. The vehicle information, the maintenance information, etc. may be acquired also from a maintenance factory, etc., where the maintenance has been performed for the vehicle 20, via a maintenance-factory terminal 30 configured of an information processing terminal such as a PC (Personal Computer).

In the carrier, a user utilizes a service such as the support for making the maintenance plan by, for example, utilizing a not-shown Web browser or others on a carrier terminal 40 configured of an information processing terminal such as a PC, and accessing the vehicle preventive maintenance server 10 via the network 50.

The vehicle preventive maintenance server 10 is, for example, a server system which is implemented by using a virtual server or others structured on server equipment in a data center or on a cloud computing service, and the vehicle preventive maintenance server 10 has units such as a vehicle-information collecting unit 11, a relative-information acquiring unit 12, an analysis unit 13, a plan managing unit 14, and a plan evaluating unit 15, the units being installed as software programs operated on a middleware such as a not-shown OS (Operating System), DBMS (DataBase Management System), or Web server program. Also, the vehicle preventive maintenance server 10 has each database and table such as a vehicle-information accumulating database (DB) 16, a vehicle state DB 17, a maintenance plan DB 18, and a consumable master DB 19.

The vehicle-information collecting unit 11 has a function to periodically or appropriately acquire and collect the vehicle information related to the vehicles 20 and the information related to the processing results of the maintenance from each vehicle 20, the maintenance-factory terminal 30, etc., via the network 50, and to record the information in the vehicle-information accumulating DB 16. As described later, the vehicle information can contain, for example, position information based on GPS (Global Positioning System), information such as the speed and a tachometer collected by an electronic control unit (ECU: Electronic Control Unit), etc., and information collected by various sensors. The information collected by the various sensors are desirably quantitatively-evaluable information which has been conventionally qualitatively evaluated based on human senses such as a temperature of the consumable or a temperature around the consumable, and besides, a sound volume in an engine room and a tensile force, hardness, etc. of an elastic body such as a belt.

The relative-information acquiring unit 12 has a function to acquire external relative information that can affect the running operation and the state of the vehicle 20 corresponding to the vehicle information recorded in the vehicle-information accumulating DB 16 from a not-shown external service or others, and to record the relative information singularly or in combination with the vehicle information in the vehicle-information accumulating DB 16. The relative information can contain, for example, weather information, geographical information, road information, etc. at a moment or a position at which the vehicle information has been acquired.

The analysis unit 13 has a function to analyze the vehicle information accumulated in the vehicle-information accumulating DB 16 at a predetermined timing such as every certain period of time, to estimate the state, the deterioration state of various consumables, etc. for every vehicle 20 at the moment or to predict the future deterioration state, and to record the results thereof in the vehicle state DB 17.

The deterioration state of the consumable is estimated/predicted by, for example, calculating the current a deterioration rate at a current moment or a predetermined future moment (specified by timing, running distance, etc.) of the consumable. The deterioration rate is obtained by, for example, multiplying the result, which is obtained by a basic calculation formula statically set in accordance with the attribute of the consumable, by a deterioration coefficient, which is set based on variation factors such as a running condition and an external condition. Regarding the basic calculation formula, the acquired values of the sensors can be used as they are for the consumable having the degree of deterioration which can be judged directly by the numerical values obtained by the sensors such as the tensile force of the elastic body, the remaining amount of liquid, a thickness of an object, and a depth of a groove, and the deterioration rate can be calculated as, for example, a rate (%) with respect to a value of a state having the deterioration rate of 100% that requires immediate replacement.

On the other hand, regarding the consumable having the degree of deterioration which cannot be directly measured by the sensors, the deterioration rate thereof is estimated based on other vehicle information. For example, in a case of engine oil, the deterioration rate is set as "the number of engine rotations × the running kilometers" and is calculated as a rate (%) of an actual running result (a₁×b₁+a₂×b₂+a₃×b₃ when "running b₁ kilometers at a₁ rotations", and then, "running b₂ kilometers at a₂ rotations", then, "running b₃ kilometers at a₃ rotations") with respect to a base value (AxB when "running B kilometers at A rotations") which is to be the state having the deterioration rate of 100% which requires the immediate replacement. In the present embodiment, note that the deterioration rate is calculated with %. However, the unit is not limited to this, and any unit can be used as the deterioration degree as long as the unit is an index with which the deterioration can be figured out.

This deterioration value is further multiplied by a deterioration coefficient, so that a corrected deterioration rate can be calculated. The deterioration coefficient is set based on, for example, the result of analyzing the correlation between the deterioration rate and the variation factor such as a running area, a road condition, weather, a load capacity, driver's attribution, and quality of consumable. For example, regarding a consumable which is expected to be deteriorated more as the running speed is higher or the load capacity is larger, the deterioration coefficient can be adjusted to be larger as the product of the running speed or the load capacity of the vehicle 20 with its duration time is larger. Also, in cooperation with a not-shown map service, the deterioration coefficient can be adjusted by analyzing the correlation between the deterioration rate and factors such as an altitude of the running location, area characteristics such as a coastal area or a mountain area, a temperature, a weather condition such as rain or snow, the degrees of a slope and a curve, traffic congestion, and a road condition of highway or others. Further, the deterioration coefficient can be adjusted by analyzing the correlation between the deterioration rate and factors such as the particular vehicle 20 or driver, and a quality and a price of a used consumable.

The correlation between the above-described variation factors and the deterioration rate may be analyzed and the method of adjusting the deterioration rate based on the analysis may be determined based on, for example, knowledge unique to a manager, etc., based on usage of such a publicly-known technique as systematically analyzing data of the vehicle-information accumulating DB 16, etc. and automatically extracting a tendency, or based on appropriate combination of these methods.

The plan managing unit 14 has a function to make a maintenance plan for every one or more vehicles 20 and to manage update of the maintenance plan or others. The maintenance plan may be automatically made and updated based on the information of the deterioration state of the consumable at the current moment recorded in the vehicle state DB 17, the information of the evaluation results of the maintenance plan by a later-described plan evaluating unit 15, and others. For example, if the replacement timing of each consumable is set so as to perform the replacement when the predicted value of the deterioration rate exceeds a predetermined value (for example, 80%), efficiency for the consumables for which the replacement timing will come at the earliest moment thereafter can be made such that the consumables having predicted values of the deterioration rate at the setting moment for which the replacement timing has not been come yet but which exceeds a predetermined value (for example, 70%) are collectively to be the replacement targets.

Note that the maintenance plan may be set, corrected, or adjusted on the basis of basic contents of a maintenance plan or others inputted and instructed from the carrier via the carrier terminal 40. Also, regardless of the execution timing of the maintenance based on the maintenance plan, if there is a consumable having a deterioration rate for which the replacement timing has come, instruction for emergency maintenance may be made as needed. In both of the maintenance and the emergency maintenance based on the maintenance plan, for example, the vehicle 20 can be informed of and guided to a maintenance factory near the current position of the vehicle 20 by, for example, cooperation with a not-shown map service.

When the maintenance is performed in the maintenance factory in accordance with the maintenance plan registered in the maintenance plan DB 18, the plan evaluating unit 15 compares the information of the results of the maintenance, the information of the vehicle state DB 17 after the update, etc. with the contents of the maintenance plan in the maintenance plan DB 18, and evaluates the validity of the maintenance plan. For example, for the replaced consumable and the not-replaced consumable, the validity of the deterioration coefficient in the deterioration rate calculation is evaluated by comparing the predicted deterioration state and the actual deterioration state figured out in the maintenance factory. The method of adjusting the deterioration coefficient may be changed by statistically performing the analysis based on the results of a plurality of times of maintenance including the plurality of vehicles 20 and by extracting the factors that can affect the deterioration rate.

Also, the plan evaluating unit 15 also calculates, compares, and evaluates the information related to the cost performance based on the correlation between the price of the consumable and the period taken until the replacement based on a plurality of evaluation results for the consumables of the same type. Here, it is desired to perform the evaluation from the viewpoint of life cycle cost (LCC) in whole expected durable years of the vehicles 20. For example, in a consumable having a high price (quality and performance are high) and a short period until the replacement and a consumable having a low price and a long period until the replacement, the life cycle cost of the former can be cheaper. Also, even the consumable having the lower price can be sufficiently used. Further, the life cycle cost can be affected by the labor charge required for the replacement and the attachment of the consumable.

Also, the plan evaluating unit 15 has a function to update the maintenance plan DB 18 for the next maintenance plan based on the evaluation results, by, for example, adjusting the maintenance timing, adding/removing the consumable of the replacement target, performing the correction such as the change of the consumable to the other consumable having the high cost performance registered in the consumable master DB 19, adjusting the deterioration coefficient in the calculation of the deterioration rate, and others. A process of previously reviewing the next maintenance plan may be performed based on information such as the deterioration state of the consumable at the current moment recorded in the vehicle state DB 17 in addition to the post evaluation for the maintenance plan based on the results of the maintenance. Also, if there is such a tendency that, for example, a particular driver has the high deterioration rate, the process is not limited to the review of the maintenance plan but can instruct the driver in the driving content by notifying the driver of the tendency by a message or others. As described above, the vehicle preventive maintenance server 10 has, for example, a not-shown Web server program, and provides a service that supports the making of the maintenance plans as described above as a Web service via the network 50.

Meanwhile, the vehicle 20 has: a vehicle-information acquiring unit 21 for acquiring and collecting various vehicle information; and a control unit 22 which controls the behavior of the vehicle or others based on the acquired vehicle information and which has a communication function of transmitting the vehicle information to the vehicle preventive maintenance server 10 via the network 50 by wireless communication. The vehicle-information acquiring unit 21 collects, for example, information collected from an ECU via a CAN (Control Area Network), position information acquired by GPS, and information from the sensor set at each part of the vehicle 20.

The control unit 22 periodically or appropriately uploads the vehicle information data, which is acquired and collected by the vehicle-information acquiring unit 21, to the vehicle preventive maintenance server 10 via the network 50 by utilizing a mobile communication system so-called 3G, 4G, or others. A configuration may be provided so that information related to the maintenance plan such as coming of the maintenance timing, control information for the vehicle 20, etc. are transmitted from the vehicle preventive maintenance server 10 or another system to the vehicle 20, or are downloaded by the vehicle 20.

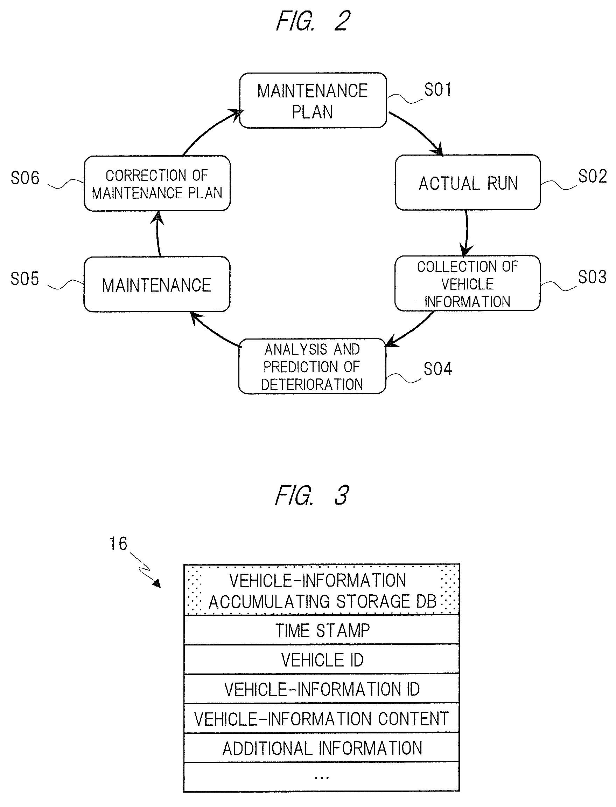

FIG. 2 is a diagram showing an outline of an example of the PDCA cycle which can be achieved by utilizing a preventive maintenance service according to the present embodiment. For example, first, the carrier can make a maintenance plan and register that in the maintenance plan DB 18 by using the vehicle preventive maintenance system 1 (S01). Then, while the vehicle 20 actually runs (S02), the vehicle preventive maintenance server 10 collects the vehicle information, which is transmitted from the vehicle 20, and records the vehicle information in the vehicle-information accumulating DB 16 (S03).

The vehicle preventive maintenance server 10 analyzes the contents of the vehicle-information accumulating DB 16 at predetermined timing, and predicts the deterioration state of the consumables of the vehicle 20 based on the results of the analysis (S04). The maintenance plan can be corrected/modified at this moment. Then, the maintenance for the vehicle 20 is actually performed in accordance with the maintenance plan, and the consumable of the replacement target is replaced (S05). At this time, the validity of the maintenance plan and the prediction of the deterioration state of the consumables is evaluated based on the results of the maintenance, and the maintenance plan is corrected, and besides, the deterioration coefficient or others in the prediction of the deterioration state of the consumables is adjusted (S06), so that a new next maintenance plan is made (S01). The accuracy of the maintenance plan can be gradually improved by achieving such a PDCA cycle.

### <Data Configuration>

FIG. 3 is a diagram showing an outline of an example of the data configuration of the vehicle-information accumulating DB 16 according to the present embodiment. The vehicle-information accumulating DB 16 is a table which records the vehicle information collected for the vehicle 20 and the information related to the processing results of maintenance, the table having items such as a timestamp, a vehicle ID, a vehicle-information ID, a vehicle-information content, and additional information.

The timestamp item retains the information of the timestamp at the moment when the target vehicle information is acquired. If the information of the timestamp cannot be acquired from the vehicle 20, a timestamp at the moment of recording in the vehicle-information accumulating DB 16 is used. The vehicle ID item retains the information of an ID or others by which the vehicle 20 can be uniquely identified, the vehicle for which the target vehicle information has been acquired. The vehicle-information ID item retains information such as an ID and a code value by which a type of the target vehicle information can be uniquely identified. The types of the vehicle information include, for example, the vehicle speed, the number of engine rotations, the running distance, the GPS position information, the temperature information of each part, the remaining amounts of oil and a battery, the load capacity, information related to ETC (Electronic Toll Collection system) (registered trademark), etc.

The vehicle-information content item retains the contents of the target vehicle information. The contents can be in different layouts or formats depending on the types of the vehicle information, and the information can be figured out by, for example, a method which is previously determined based on the above-described vehicle-information ID. As the additional information item, the information related to the variation factor for the vehicle 20 at the moment of the acquiring of the target vehicle information is acquired from the relative-information acquiring unit 12, etc. , and is retained as needed. As the additional information, for example, if the vehicle information is the GPS position information, weather information such as the weather, atmospheric temperature, and humidity of the target area at the moment of the timestamp can be added. Moreover, road information indicating whether the running road is a highway or not, etc. can be added. Note that these pieces of information can be also added asynchronously with the recording of the vehicle information as needed.

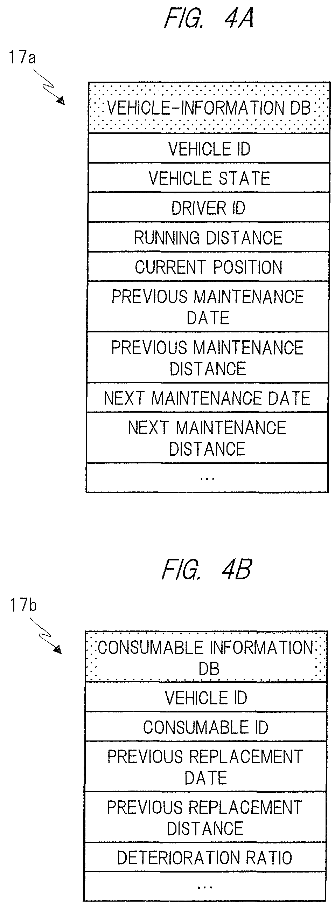

FIG. 4 is a diagram showing an outline of an example of the data configuration of the vehicle state DB 17 according to the present embodiment. In the present embodiment, the vehicle state DB 17 is formed of, two tables of a vehicle-information DB 17a which retains the information per vehicle at the current moment, in other words, at the moment of the record/update of the information for each vehicle 20, and a consumable-information DB 17b which retains the information per consumable at the current moment.

FIG. 4 (a) is a diagram showing the vehicle-information DB 17a of the DBs forming the vehicle state DB 17. The vehicle-information DB 17a has items such as a vehicle ID, a vehicle state, a driver ID, a running distance, a current position, a previous maintenance date/time, a previous maintenance distance, a next-maintenance scheduled date/time, and a next-maintenance scheduled distance.

The vehicle ID item retains information such as an ID by which the target vehicle 20 can be uniquely identified. By using this vehicle ID as a key, a not-shown vehicle master table or others is accessed, so that master information such as a vehicle type of the target vehicle 20 can be acquired. The vehicle state item retains information such as the code value indicating the state of the target vehicle 20 at the current moment. For example, the item can be represented by the code value indicating status such as normal/abnormal and running/stopping state. The driver ID item retains ID information or others specifying a person allocated to the target vehicle 20 as the driver.

The running distance item retains the information of the running distance (km) accumulated from the shipment of the target vehicle 20. The current position item retains information such as the latitude/longitude showing the position of the target vehicle 20 at the current moment acquired by the GPS. The previous maintenance date/time item and the previous maintenance distance item retain information of the date/time and the running distance at the moment when the previous maintenance is performed for the target vehicle 20, respectively. The next maintenance date/time item and the next maintenance distance item retain information of the date/time and the running distance at which the next maintenance for the target vehicle 20 is scheduled, respectively.

FIG. 4 (b) is a diagram showing the consumable-information DB 17b of the DBs forming the vehicle state DB 17. The consumable-information DB 17b has items such as a vehicle ID, a consumable ID, a previous replacement date, a previous replacement distance, and the deterioration rate. The vehicle ID item is the information of an ID or others specifying the target vehicle 20, and has the same contents as those of the vehicle ID item of the vehicle-information DB 17a. The consumable ID item retains information of an ID, a model number, or others by which the consumable attached to the target vehicle 20 can be uniquely identified. This consumable ID is defined in, for example, a consumable master DB 19 which will be described later.

The previous replacement date item and the previous replacement distance item retain the information of the date and the running distance at which the target consumable has been replaced in the previous time, respectively. If the running distance does not contribute to the determination of the replacement timing of the target consumable as a parameter, it is not required to set the value for the previous replacement distance item. The deterioration rate item retains the information of the deterioration rate at the current moment calculated and predicted for the target consumable.

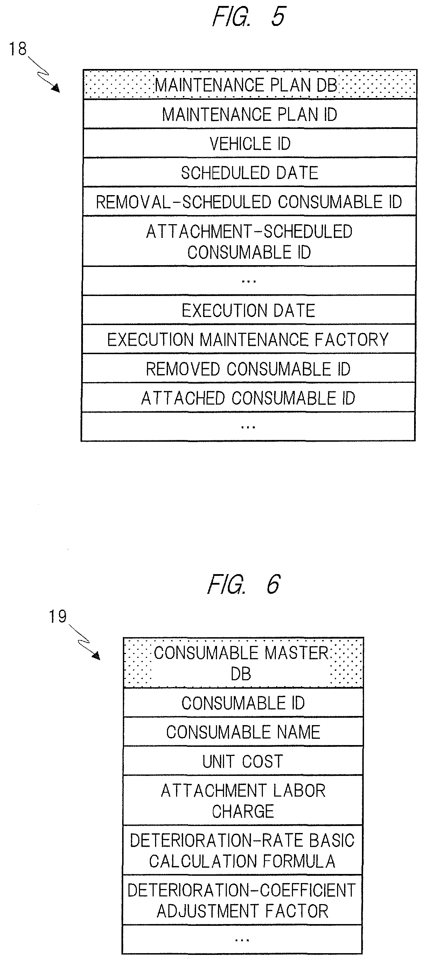

FIG. 5 is a diagram showing an outline of an example of the data configuration of the maintenance plan DB 18 according to the present embodiment. The maintenance plan DB 18 is a table which retains information of the maintenance plan and the execution state of the maintenance plan, and has items such as a maintenance plan ID, a vehicle ID, a scheduled date, one or more removal-scheduled consumable ID(s) and attachment-scheduled consumable ID(s), execution date, execution maintenance factory, and one or more removed consumable ID(s) and attached consumable ID(s).

The maintenance plan ID item retains information of an ID, a sequence number, or others by which the target maintenance plan can be uniquely identified. The vehicle ID item is information of an ID or others by which the vehicle 20 to be maintained is specified in the target maintenance plan, and has the same contents as those of the vehicle ID item of the above-described vehicle-information DB 17a. The scheduled date item retains information of the scheduled date for the maintenance according to the target maintenance plan. The removal-scheduled consumable ID item and the attachment-scheduled consumable ID item are the information of IDs or others by which a replacement target consumable and a new-attachment target consumable in the maintenance according to the target maintenance plan are specified, respectively. These IDs are defined in, for example, a consumable master DB 19 described later. A plurality of the replacement target consumables are configured to be registerable. Moreover, information of the number of the replacement targets may be included.

The execution date item and the execution maintenance factory item retain the information for specifying the date and the maintenance factory at which the maintenance according to the target maintenance plan has been actually performed, respectively. The removed consumable ID item and the attached consumable ID item are the information of IDs or others by which the actually-replaced consumable and the newly-attached consumable in the maintenance according to the target maintenance plan are specified, respectively. These IDs are also defined in, for example, the consumable master DB 19 described later. A plurality of replaced consumables are configured to be registerable. Moreover, information of the number of the replaced consumables may be included.

FIG. 6 is a diagram showing an outline of an example of the data configuration of the consumable master DB 19 in the present embodiment. The consumable master DB 19 is a table for retaining master information related to a consumable which has been attached to the vehicle 20 or can be replaced and attachable thereto in maintenance, and has items such as a consumable ID, a consumable name, a unit price, an attachment labor charge, a deterioration-rate basic calculation formula, and a deterioration-coefficient adjustment factor.

The consumable ID item retains information such as an ID, a part number, and a model number by which the target consumable can be uniquely identified. Note that the consumables are not limited to solid objects, but also include liquid such as oil and coolant, gas, etc. The consumable name item retains display information such as a product name, grade, and the number of the target consumables. The unit price item and the attachment labor charge item retain information of the unit price of the target consumable and the labor charge taken when the target consumable is replaced and attached, respectively. These pieces of information become base of calculating the life cycle cost for the maintenance of the consumable. Note that the attachment operations also include such an operation as filling and refilling the liquid such as oil.

The deterioration-rate basic calculation formula item retains information such as a formula to be a base or a parameter to be used in the calculation of the deterioration rate for the target consumable. The deterioration-rate basic calculation formula is expressed as, for example, "the number of engine rotations × the running kilometers" as described above or others if the target consumable is an engine oil. As described above, if the calculation is performed only with the multiplication of the parameters, only the parameters may be specified.

The deterioration-coefficient adjustment factor item retains information such as a formula or a parameter to be used for determining the deterioration coefficient in the correction of the deterioration rate calculated by the above-described deterioration-rate basic calculation formula in consideration of various factors and conditions. A predetermined value (for example, 0.1) can be added to or subtracted from the deterioration coefficient (for example, initial value = 1.0) if, for example, the factor or parameter that affects the deterioration rate has a higher or lower value than a predetermined threshold value based on the results of analyzing the correlation between the deterioration rate and the variation factor such as the running area, the road condition, the weather, the load capacity, the driver attribute, and the quality of the consumable as described above. Therefore, this item retains information such as a type of one or more factors or parameters that can vary the deterioration coefficient, their threshold values, and distinguishing of addition or subtraction.

Note that the data configurations (items) of the tables shown in FIG. 3 to FIG. 6 described above are merely examples. Other table configurations and data configurations may be employed as long as similar data can be retained/managed with the configurations.

As described above, according to the vehicle preventive maintenance system 1 which is an embodiment of the present invention, for example, in a carrier, etc., the vehicle information can be centrally collected and managed by telematics, the deterioration state of the consumable can be quantitatively estimated based on the information, and the making and management of the maintenance plan can be efficiently supported based on the results of the estimation. From the viewpoint of the preventive maintenance, this maintenance plan includes information indicating which parts is to be used as the consumable after the replacement in addition to the contents indicating when the next (or the subsequent or later maintenance after the next) maintenance is to be performed for each vehicle, and which consumables are to be collectively replaced. Moreover, as even the same consumables, the parts that can reduce the life cycle cost the most can be selected from the viewpoints of the price and the quality.

Moreover, the PDCA cycle is achieved so that not only the maintenance plan is made but also the validity of the maintenance plan is evaluated based on the results of the maintenance performed based on the maintenance plan, and also the next maintenance plan is optimized by feeding back the evaluation result to the maintenance plan, so that the maintenance plan can be continuously improved.

In the foregoing, the invention made by the present inventors has been concretely described based on the embodiments. However, it is needless to say that the present invention is not limited to the foregoing embodiments and various modifications and alterations can be made within the scope of the present invention. For example, the above-described embodiments have been explained in detail for easily understanding the present invention, but are not always limited to the ones including all structures explained above. Also, a part of the structure of the above-described embodiment can be added to/eliminated from/replaced with other structure.

Moreover, although the above-described diagrams show control lines and information lines which are conceived to be necessary in terms of explanation, the drawings do not always show all of control lines and information lines in terms of mounting. Practically, almost all of the configurations may be conceived to be connected to each other.

### INDUSTRIAL APPLICABILITY

The present invention can be utilized in a vehicle preventive maintenance system that supports making and management of an appropriate maintenance plan by telematics.

### SYMBOL EXPLANATION

1 ... vehicle preventive maintenance system
10 ... vehicle preventive maintenance server, 11 ... vehicle-information collecting unit, 12 ... relative-information acquiring unit, 13 ... analysis unit, 14 ... plan managing unit, 15 ... plan evaluating unit, 16 ... vehicle-information accumulating database (DB), 17 ... vehicle state DB, 18 ... maintenance plan DB, 19 ... consumable master DB,
20 ... vehicle, 21 ... vehicle-information acquiring unit, 22 ... control unit,
30 ... maintenance factory terminal
40 ... carrier terminal
50 ... network

## Claims

1. A vehicle preventive maintenance system which supports management of a maintenance plan related to execution of maintenance of replacing a consumable of a vehicle, comprising:
a vehicle-information collecting unit which collects vehicle information collected at each vehicle and information related to a result of maintenance of the vehicle via a network and which records the information in a vehicle-information accumulating storage unit;
an analysis unit which calculates a deterioration degree of a consumable of each vehicle based on the vehicle information recorded in the vehicle-information accumulating storage unit and which records the deterioration degree in a vehicle-state storage unit;
a plan managing unit which creates or updates the maintenance plan including information of timing of the maintenance and a replacement target consumable based on the deterioration degree of each consumable or a prediction of the deterioration degree thereof recorded in the vehicle-state storage unit and which records the maintenance plan in the maintenance-plan storage unit; and
a plan evaluating unit which evaluates validity of the maintenance plan related to the maintenance based on information including a result of replacement of the consumable in the maintenance of each vehicle.

2. The vehicle preventive maintenance system according to claim 1, further comprising
a relative-information acquiring unit which acquires information related to a variation factor which can affect the deterioration degree,
wherein the analysis unit calculates a deterioration coefficient based on the variation factor and corrects the deterioration degree of the consumable of each vehicle by using the deterioration coefficient.

3. The vehicle preventive maintenance system according to claim 2,
wherein the variation factor includes one or more factor (s) of an area characteristic, a road condition, and a weather condition at a running position of the vehicle, a load capacity of the vehicle, driver's attribution, and a quality of the consumable.

4. The vehicle preventive maintenance system according to claim 1,
wherein the plan managing unit collectively sets a consumable as a replacement target of next maintenance in the maintenance plan, the consumable of consumables of the vehicle having the deterioration degree equal to or higher than a second predetermined value, which is lower than a first predetermined value, at a moment when the consumable having the deterioration degree in future which becomes equal to or higher than the first predetermined value at the earliest moment is generated.

5. The vehicle preventive maintenance system according to claim 1,
wherein, when the plan evaluating unit evaluates the validity of the maintenance plan, the plan evaluating unit performs evaluation based on life cycle cost of replacement of the consumable over a period of a durable year of the vehicle.
